(19) Europäisches Patentamt
European Patent Office
Office européen des brevets

(11) Numéro de publication : **0 117 596**
**B1**

(12) # FASCICULE DE BREVET EUROPÉEN

(45) Date de publication du fascicule du brevet : **07.09.88**

(51) Int. Cl.[4] : **H 04 B 3/23**

(21) Numéro de dépôt : **84200257.8**

(22) Date de dépôt : **22.02.84**

(54) **Procédé de réduction du temps de convergence d'un annuleur d'écho et dispositif pour mettre en oeuvre ce procédé.**

(30) Priorité : **25.02.83 FR 8303113**

(43) Date de publication de la demande :
**05.09.84 Bulletin 84/36**

(45) Mention de la délivrance du brevet :
**07.09.88 Bulletin 88/36**

(84) Etats contractants désignés :
**BE CH DE FR GB IT LI NL SE**

(56) Documents cités :
**EP-A- 0 052 362**
**EP-A- 0 096 936**
**US-A- 4 047 013**
**IBM TECHNICAL DISCLOSURE BULLETIN, vol. 21, no. 5, octobre 1978, pages 1916-1918, New York, US: A. DESBLACHE et al.: "Centering transversal equalizer tap coefficients"**
**FIFTH INTERNATIONAL CONFERENCE ON DIGITAL SATELLITE COMMUNICATIONS, Genoa, 23-26 mars 1981, pages 259-264, IEEE, US. M. COPPERI et al.: "A new approach for a microprogrammed echo canceller"**

(73) Titulaire : **TELECOMMUNICATIONS RADIOELECTRIQUES ET TELEPHONIQUES T.R.T.**
**88, rue Brillat Savarin**
**F-75013 Paris (FR)**

(72) Inventeur : **Chevreau, Jean-Philippe Joseph**
**SOCIETE CIVILE S.P.I.D. 209 rue de l'Université**
**F-75007 Paris (FR)**
Inventeur : **Guidoux, Loic Bernard Yves**
**SOCIETE CIVILE S.P.I.D. 209 rue de l'Université**
**F-75007 Paris (FR)**

(74) Mandataire : **Chaffraix, Jean et al**
**Société Civile S.P.I.D. 209, rue de l'Université**
**F-75007 Paris (FR)**

EP 0 117 596 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

La présente invention concerne un procédé destiné à réduire le temps de convergence d'un annuleur d'écho faisant partie d'un système comprenant au moins deux équipements émetteurs-récepteurs dont un est dit équipement local et l'autre équipement distant, cet annuleur d'écho qui est connecté dans un équipement émetteur-récepteur entre deux voies unidirectionnelles émission et réception couplées à une voie bidirectionnelle et qui est utilisé pour annuler un signal d'écho se produisant dans la voie réception en réponse à un signal fourni à la voie émission, comprenant un filtre transversal à N coefficients réglables traitant un signal déduit du signal fourni à la voie émission et un circuit de différence pour former un signal de différence entre deux signaux formés respectivement à partir du signal dans la voie réception et du signal de sortie du filtre transversal, ce procédé étant basé :

— sur l'émission dans l'équipement local d'un signal de données d'apprentissage d(n) formé de données émises à des instants nT, se reproduisant périodiquement après une durée LT au moins égale à NT et répondant à des propriétés d'autocorrélation,

— sur le calcul des coefficients du filtre transversal effectué à partir de ce signal de données d'apprentissage.

Les annuleurs d'écho sont utilisés par exemple dans les modems de transmission de données dont les voies émission et réception formant ensemble un accès quatre fils sont couplées par un circuit de couplage, de façon que chaque modem ait avec l'extérieur un accès deux fils. On sait que, lorsqu'on établit une liaison entre deux modems par leurs accès deux fils, il peut se produire dans la voie réception de chaque modem un signal intempestif, appelé signal d'écho, qui est une fraction du signal émis par la voie émission du même modem et qui est dû à des imperfections du circuit de couplage et/ou à des réflexions dans la liaison. Un annuleur d'écho a pour but d'annuler automatiquement ce signal d'écho, afin de permettre une transmission en duplex simultané, entre deux modems reliés par leurs accès deux fils.

Dans un annuleur d'écho, les coefficients du filtre transversal sont à régler de façon qu'ils soient pratiquement égaux à des échantillons de la réponse impulsionnelle du chemin d'écho, de sorte que ce filtre fournit alors un signal de copie d'écho qui annule pratiquement le signal d'écho dans le signal de sortie du circuit de différence. Pendant la période de transmission du signal utile, les coefficients du filtre transversal sont généralement réglés par récurrences successives, suivant l'algorithme du gradient, de façon à minimiser la valeur quadratique moyenne du signal de différence ou signal d'erreur apparaissant à la sortie du circuit de différence. Mais cette méthode, appliquée à l'initialisation des coefficients avant la transmission du signal utile procure un temps de convergence des coefficients très long, se chiffrant par plusieurs secondes et pouvant être inacceptable.

On notera qu'un tel procédé est décrit dans la demande de brevet européen EP-A-0 096 936 publiée le 28-12-83 et qui fait donc partie de l'état de la technique au titre de l'article 54 (3) dans les états communs désignés (CH, DE, FR, GB, IT, LI, SE). Il n'y a par conséquent pas à opposer cette demande, au titre de l'activité inventive, à la présente invention.

Un tel procédé est également décrit dans l'article de M. Copperi et al. intitulé « A New Approach for a Microprogrammed Echo Canceller » paru dans la publication Fifth international conference on digital satellite communications, Genoa, 23-26 mars 1981, pages 259-264, IEEE, US.

Dans ce dernier procédé précité, le signal de différence doit être élaboré à partir de signaux complexes, c'est-à-dire que la soustraction est effectuée tant en ce qui concerne les composantes en phase que les composantes en quadrature du signal dans la voie réception et du signal de sortie du filtre transversal.

Le traitement de signaux complexes est considéré comme désavantageux car il implique bon nombre de calculs, surtout si l'on s'impose de modifier les coefficients du filtre transversal.

La présente invention propose un procédé selon la revendication 1 du premier jeu de revendications valable pour les états suivants CH, DE, FR, GB, IT, LI, SE et selon la revendication 1 du deuxième jeu de revendications valable dans les états suivants : BE et NL, qui limite dans une certaine mesure les calculs sur des signaux complexes et qui permet une convergence rapide de l'annuleur d'écho avant la transmission du signal utile.

Pour cela, un procédé du genre mentionné dans l'introduction préambule est remarquable en ce que les propriétés d'autocorrélation sont définies par les deux relations suivantes :

$$\frac{1}{\sigma^2}\sum_{n=0}^{L-1} d(n)\cdot d^*[(n-i)\ \text{modulo}\ L] = -1$$

pour tout i entier tel que $1 \leq i \leq N-1$,

$$\frac{1}{\sigma^2}\sum_{n=0}^{L-1} d^*(n)\cdot d^*[(n-i)\ \text{modulo}\ L] = -1$$

pour tout i entier tel que $0 \leq i \leq N-1$, $d^*(n)$ étant la valeur conjuguée d'une donnée d(n) du signal d'apprentissage ; et en ce que les calculs des coefficients du filtre transversal sont effectués, après l'émission d'au moins N données du signal d'apprentissage et à partir de la séquence formée par les L données émises suivantes selon l'expression :

$$\vec{C} = \vec{C}_0 + \frac{2}{(L+1)\sigma^2} \sum_{n=0}^{L-1} e_R(n) \cdot \vec{D}^*(n)$$

$\vec{C}$ étant le vecteur des N coefficients obtenus à la fin du calcul,

$\vec{C}_0$ étant le vecteur des N coefficients initiaux,

$e_R(n)$ étant ledit signal de différence,

$\vec{D}^*(n)$ étant le vecteur des valeurs conjuguées des N dernières données entrées dans le filtre transversal,

$\sigma^2$ étant un terme constant représentatif de la puissance de chaque donnée émise.

Dans la pratique, les coefficients $\vec{C}_0$ initiaux du filtre transversal sont mis à zéro, ce qui permet en outre, dans la formule de calcul des coefficients, de substituer au signal de différence $e_R(n)$, le signal reçu $\varepsilon_R(n)$.

Dans le cas souvent rencontré en pratique où la réponse impulsionnelle du chemin d'écho comporte une composante continue, les coefficients calculés comme prévu ci-dessus sont erronés. Une variante de la présente invention fournit un procédé très simple pour corriger ces coefficients calculés.

Selon cette variante, les données du signal d'apprentissage sont émises en direction de la voie de transmission avec un retard au moins égal à une période de modulation T par rapport aux données appliquées au filtre transversal, le nombre N des coefficients du filtre transversal est choisi au moins une unité plus grand que le nombre correspondant à la durée maximale de la réponse impulsionnelle du chemin d'écho, enfin, à la fin du calcul des coefficients, le premier coefficient calculé ou l'un des coefficients supplémentaires calculés, est retranché des autres coefficients calculés pour former les coefficients désirés du filtre transversal.

La présente invention fournit enfin un procédé simple permettant d'engendrer une séquence d'apprentissage répondant aux deux propriétés ci-dessus.

Selon ce procédé les données d(n) du signal d'apprentissage sont formées à partir de deux séquences pseudo-aléatoires identiques de longueur maximale L, formées d'éléments + 1 et — 1 engendrés en synchronisme à la fréquence 1/T, ces deux séquences étant décalées d'un nombre K de périodes T l'une par rapport à l'autre, les composantes réelle et imaginaire de chaque donnée d(n) à un instant nT étant obtenues respectivement par combinaison additive et soustractive (ou l'inverse) des valeurs des éléments des deux séquences au même instant nT.

De préférence la longueur L des deuxdites séquences pseudo-aléatoires est choisie de sorte que $L > 2N + 1$ et le décalage entre ces deux séquences est choisi de sorte que $k = (L-1)/2$.

Dans ce cas le temps de convergence de l'annuleur d'écho peut être réduit à une valeur quasiment égale à 3 NT.

La description suivante, en regard des dessins annexés, le tout donné à titre d'exemple, fera bien comprendre comment l'invention peut être réalisée.

La figure 1 représente le schéma d'un modem muni d'un annuleur d'écho auquel peut s'appliquer le procédé de l'invention.

La figure 2 représente le schéma possible d'un dispositif permettant d'engendrer le signal d'apprentissage selon le procédé de l'invention.

La figure 3 représente des diagrammes montrant des fonctions AC(i) et B(i) caractérisant le signal d'apprentissage fourni par le dispositif de la figure 2.

Le modem muni d'un annuleur d'écho dont le schéma est représenté à la figure 1 comporte une voie émission 1 munie d'un modulateur 2 recevant des données en bande de base à transmettre et une voie réception 3 munie d'un récepteur 4, chargé de restituer des données transmises, en provenance d'un modem distant. La sortie du modulateur 2 est reliée à l'accès émission du circuit de couplage 5 et l'accès réception de ce circuit de couplage est relié, par l'intermédiaire d'un certain nombre d'éléments décrits par la suite, à l'entrée du récepteur 4. Ce circuit de couplage 5 permet de coupler les deux voies émission et réception du modem à la voie de transmission bidirectionnelle 6, pour des liaisons en duplex simultané avec un modem distant non représenté, couplé de la même manière à la voie de transmission 6.

Lorsque le modulateur 2 émet dans la voie émission 1 un signal modulé par les données à transmettre vers le modem distant, il peut se produire dans la voie réception 3 un signal d'écho intempestif provenant d'imperfections du circuit de couplage 5 ou de réflexions dans la voie de transmission 6 et pouvant perturber dans le récepteur 4 la démodulation du signal reçu en provenance du modem distant. L'annuleur d'écho incorporé dans le modem de la figure 1 est chargé d'éliminer le signal d'écho dans la voie réception 3.

Cet annuleur d'écho utilise un signal de données complexe qui est formé dans le modulateur 2, à partir des données en bande de base à transmettre et qui permet la transmission par modulation d'une

porteuse sur une voie en phase et une voie en quadrature. Dans l'exemple de réalisation représenté, le modulateur 2 comporte un circuit de codage 7 recevant les données à transmettre et fournissant une paire de signaux représentatifs des amplitudes A(n) et des changements de phase φ(n) à affecter à la porteuse en fonction des données, à des instants nT déterminés par le générateur 8 d'un signal d'horloge à la fréquence 1/T, 1/T étant la cadence de modulation et n un nombre entier variable de $-\infty$ à $+\infty$. Pour tenir compte de la variation de phase Δφ de la porteuse pendant chaque intervalle de modulation T, on utilise un circuit additionneur 9 fournissant à chaque instant nT, la somme φ(n) + Δφ qui est représentative de la phase absolue ψ(n) de la porteuse modulée à émettre. Les deux signaux d'amplitude A(n) et de phase ψ(n) forment ensemble un signal complexe D(n) qui est appliqué au circuit 10 qui en forme la composante réelle $A(n) \cdot \cos\psi(n)$ et la composante imaginaire $A(n) \cdot \sin\psi(n)$. Dans le modulateur 2, le signal complexe D(n) est appliqué à un filtre passe-bande pour signal complexe formé par deux filtres passe-bande 11 et 12 qui reçoivent respectivement la composante réelle et la composante imaginaire du signal D(n) et dont la bande passante est centrée sur la fréquence de la porteuse utilisée pour la transmission. Les signaux de sortie des deux filtres 11 et 12 sont additionnés dans le circuit additionneur 13 pour former le signal analogique de porteuse modulé qui est dirigé vers l'accès émission du circuit de couplage 5.

Le signal complexe D(n) ainsi formé dans le modulateur 2 est utilisé également dans l'annuleur d'écho. On doit noter ici que pour plus de clarté, on a représenté sur le schéma de la figure 1 par un trait double les liaisons transmettant des signaux complexes et par un trait simple les liaisons transmettant des signaux réels. L'annuleur d'écho comporte un filtre transversal 15 qui reçoit le signal complexe D(n) qui est échantillonné aux instants nT et que l'on suppose pour simplifier le schéma, de type analogique. Le filtre transversal 15 est muni d'un circuit de réglage 16 de ses coefficients complexes. Dans le cas d'utilisation du procédé de la présente invention, le filtre transversal 15 est agencé, comme on l'a représenté sur la figure 1, pour fournir un signal de sortie réel $\hat{\varepsilon}_R(n)$, qui est la composante réelle d'un signal complexe résultant d'un signal d'entrée complexe D(n) et de coefficients complexes. Le signal de sortie $\hat{\varepsilon}_R(n)$ du filtre transversal 15 est appliqué à l'entrée (—) du circuit de différence 17. A l'entrée (+) de ce circuit 17 sont appliqués les échantillons du signal apparaissant à l'accès réception du circuit de couplage 5. Ces échantillons sont formés à l'aide du circuit d'échantillonnage et de maintien 19 dans lequel l'échantillonnage est effectué à une fréquence $f_e$ fournie par le générateur 8. Cette fréquence $f_e$ est multiple de la fréquence de modulation (1/T) [$f_e = (q/T)$] et telle que le théorème de Shannon soit respecté vis-à-vis du signal d'écho. Mais, pour simplifier les explications, on ne considère par la suite, parmi les échantillons fournis par le circuit 10, que ceux notés $\varepsilon_R(n)$ qui se produisent à la fréquence 1/T, aux mêmes instants nT que les échantillons du signal de données D(n). En effet, le signal reçu échantillonné à la fréquence $f_e = q/T$, peut être considéré comme formé de q suites d'échantillons entrelacés à la fréquence 1/T et il est bien connu dans la technique des annuleurs d'écho que ces q suites d'échantillons peuvent être traitées de la même manière, dans q sous annuleurs d'écho travaillant chacun de façon indépendante à la fréquence 1/T.

Le signal réel $e_R(n)$ fourni par le circuit de différence 17 est appliqué au circuit de réglage 16, dans lequel il est utilisé pour régler les coefficients du filtre transversal 15. Lorsque ces coefficients sont convenablement réglés, le signal de copie d'écho $\hat{\varepsilon}_R(n)$ fourni par le filtre transversal 15 est substantiellement égal au signal d'écho apparaissant à l'accès réception du circuit de couplage 5 de sorte que dans le signal $e_R(n)$ fourni par le circuit 17, le signal d'écho est pratiquement annulé. Ce signal de différence ainsi débarrassé du signal d'écho est appliqué au récepteur 4, par l'intermédiaire du filtre passe-bas 20.

Pendant la phase de transmission des données utiles, les coefficients de l'annuleur d'écho sont réglés généralement, dans le circuit 16, par récurrences successives, en utilisant l'algorithme du gradient, de façon à minimiser la valeur quadratique moyenne du signal d'erreur fourni par le circuit de différence 17. Pour obtenir rapidement la valeur optimale de ces coefficients avant cette phase de transmission, on a fourni dans la demande de brevet précitée EP-A-00 96 936 un procédé basé sur l'émission d'un signal d'apprentissage D(n) ayant la propriété définie par la formule (1) ou par la formule (1a) lorsque le signal d'écho n'a pas de composante continue. Comme on l'a expliqué, si, à partir du signal réel reçu, on forme un signal complexe ε(n), les coefficients complexes de l'annuleur d'écho peuvent être pratiquement calculés d'après la formule (3). Pour éviter la formation d'un signal complexe et calculer les coefficients complexes de l'annuleur d'écho directement à partir du signal reçu réel $\varepsilon_R(n)$, on a décrit également un procédé en deux étapes, qui, comme on l'a expliqué, a l'inconvénient de doubler le temps requis pour le calcul des coefficients. La présente invention fournit un procédé de calcul des coefficients utilisant aussi directement le signal reçu réel, mais avec un temps de calcul des coefficients plus faible.

Selon le procédé de l'invention, le signal complexe D(n) appliqué simultanément aux filtres 11 et 12, servant à produire la porteuse modulée émise, et au filtre transversal 15 de l'annuleur d'écho, est un signal d'apprentissage périodique ayant une période LT au moins égale à NT et répondant aux deux propriétés :

$$\frac{1}{\sigma^2}\sum_{n=0}^{L-1} d(n) \cdot d^*[(n-i) \text{ modulo } L] = -1 \qquad (4)$$

pour tout i entier tel que $1 \leq i \leq N-1$

$$\frac{1}{\sigma^2}\sum_{n=0}^{L-1} d^*(n)\cdot d^*[(n-i)\,\text{modulo}\,L] = -1 \quad (5)$$

pour tout i entier tel que $0 \leq i \leq N-1$.

On donnera par la suite le moyen de réaliser très simplement un signal d'apprentissage répondant à ces propriétés. On peut noter à ce sujet que, dans la demande de brevet précitée EP-A-00 96 936, on avait préconisé un signal répondant à des propriétés ressemblantes, mais avec un deuxième membre égal à 0. On peut dire d'une manière générale que les signaux répondant aux propriétés (4) et (5) (avec — 1 au second membre) sont plus simples à engendrer. Ils peuvent être obtenus à partir de générateurs de séquence pseudo-aléatoire de longueur maximale dont on peut choisir la longueur L aussi grande que l'on veut ($L = 2^p - 1$). Par contre, les signaux répondant aux propriétés (4) et (5), mais avec 0 au second membre, ont une période de longueur L limitée, si on s'impose de ne pas utiliser de valeurs de symboles autres que celles normalement émises par le modulateur.

Après l'émission d'au moins N données du signal d'apprentissage D(n), un signal d'écho apparaît sur l'accès réception du circuit de couplage 5, et à l'aide de ce signal d'écho $\varepsilon_R(n)$ et des L données suivantes du signal d'apprentissage D(n), les N coefficients du filtre transversal 15 sont calculés dans le circuit 16, suivant l'expression :

$$\vec{C} = \vec{C}_0 + \frac{2}{(L+1)\sigma^2}\sum_{n=0}^{L-1} e_R(n)\cdot \vec{D}^*(n) \quad (6)$$

Les termes utilisés dans cette expression (6) ont déjà été définis. Les N coefficients initiaux représentés par le vecteur $\vec{C}_0$ sont maintenus pendant toute la durée du calcul à l'issue duquel on obtient les coefficients $\vec{C}$.

Dans la pratique, on annule les coefficients initiaux $\vec{C}_0$, de sorte que pendant toute la durée du calcul le signal $\hat{\varepsilon}_R(n)$ fourni par le filtre transversal est nul, et qu'ainsi le signal de différence $e_R(n)$ est égal au signal reçu $\varepsilon_R(n)$. En opérant de cette manière, les coefficients peuvent être calculés suivant l'expression :

$$\vec{C} = \frac{2}{(L+1)\sigma^2}\sum_{n=0}^{L-1} e_R(n)\cdot \vec{D}^*(n) \quad (7)$$

ou l'expression :

$$\vec{C} = \frac{1}{(L+1)\sigma^2}\sum_{n=0}^{L-1} \varepsilon_R(n)\cdot \vec{D}^*(n) \quad (7a)$$

Le trajet en pointillé sur la figure 1 montre l'utilisation du signal $\varepsilon_R(n)$ dans le circuit 16, dans le cas où les coefficients sont calculés suivant la formule (7a). C'est cette dernière formule que l'on utilisera par la suite pour simplifier l'écriture, étant entendu que les mêmes conclusions s'appliquent lorsqu'on utilise les formules (6) ou (7).

On va maintenant montrer dans quelles conditions on peut obtenir, à l'issue du calcul des coefficients suivant la formule (7), les coefficients du filtre transversal permettant l'annulation du signal d'écho. On va utiliser pour cette démonstration la notation vectorielle.

On a déjà défini le vecteur $\vec{D}(n)$ à N composantes représentant les N échantillons du signal complexe D(n) présents dans le filtre transversal à un instant nT. La transposée du vecteur $\vec{D}(n)$ est notée par la suite $\tilde{D}(n)$. On a également défini le vecteur $\vec{C}$ à N composantes représentant les N coefficients calculés du filtre transversal. On peut maintenant définir le vecteur $\vec{k}$ à N composantes complexes représentant des échantillons de la réponse impulsionnelle du trajet d'écho auquel est appliqué le signal D(n). Les coefficients du filtre transversal sont optimaux et permettent l'annulation de l'écho si $\vec{C} = \vec{k}$.

Avec ces notations, la version complexe $\varepsilon(n)$ du signal d'écho reçu $\varepsilon_R(n)$ sur la voie réception peut s'écrire :

$$\varepsilon(n) = \tilde{D}(n)\cdot \vec{k}$$

Le signal d'écho reçu $\varepsilon_R(n)$ est la partie réelle du signal complexe $\varepsilon(n)$, ce qui s'écrit :

$$\varepsilon_R(n) = \mathbb{R}_e[\varepsilon(n)]$$

En tenant compte de la formule précédente, on obtient aisément :

$$\varepsilon_R(n) = \frac{1}{2}\,[\vec{D}(n)\cdot\vec{k} + \vec{D}^*(n)\cdot\vec{k}^*] \tag{8}$$

$\vec{D}^*(n)$ et $\vec{k}^*$ étant les valeurs conjuguées de $\vec{D}(n)$ et $\vec{k}$.

En tenant compte de (8), la formule (7) peut s'écrire :

$$\vec{C} = \frac{1}{(L+1)\sigma^2}\sum_{n=0}^{L-1}[\bar{\bar{E}}(n)\cdot\vec{k} + \bar{\bar{F}}(n)\cdot\vec{k}^*] \tag{9}$$

$\bar{\bar{E}}(n)$ et $\bar{\bar{F}}(n)$ étant des matrices d'ordre N, telles que :

$$\bar{\bar{E}}(n) = \sum_{n=0}^{L-1}\vec{D}^*(n)\cdot\vec{D}(n)$$

$$\bar{\bar{F}}(n) = \sum_{n=0}^{L-1}\vec{D}^*(n)\cdot\vec{D}^*(n)$$

La matrice $\bar{\bar{E}}(n)$ a pour terme générique :

$$e_{ij}(n) = \sum_{n=0}^{L-1} d^*[(n-i)\text{ modulo } L]\cdot d[(n-j)\text{ modulo } L]$$

En tenant compte de la propriété (4) du signal d'apprentissage, on a :

$$e_{ij}(n) = -\sigma^2$$

pour toutes valeurs de i, j telles que $i \neq j$.

D'autre part, on a :

$$e_{ii}(n) = \sum_{n=0}^{L-1}|d(n)|^2 = L\sigma^2,$$

$\sigma^2$ étant la puissance de chaque donnée du signal d'apprentissage.

Le terme $\bar{\bar{E}}(n)\cdot\vec{k}$ apparaissant dans la formule (9) peut alors s'écrire :

$$\bar{\bar{E}}(n)\cdot\vec{k} = (L+1)\sigma^2 k - \left(\sum_{i=0}^{N-1} k_i\right)\vec{1} \tag{10}$$

$k_i$, pour $i = 0, 1 \ldots N-1$, étant les N composantes du vecteur $\vec{k}$, $\vec{1}$ étant le vecteur à N composantes de valeur unité.

La matrice $\bar{\bar{F}}(n)$ a pour terme générique :

$$f_{ij}(n) = \sum_{n=0}^{L-1} d^*[(n-i)\text{ modulo } L]\cdot[d^*(n-j)\text{ modulo } L]$$

En tenant compte de la propriété (5) du signal d'apprentissage on a :

$$f_{ij}(n) = -\sigma^2 \text{ quels que soient i et j.}$$

Le terme $\bar{\bar{F}}(n)\cdot\vec{k}^*$ apparaissant dans la formule (9) peut alors s'écrire :

$$\bar{\bar{F}}(n)\cdot\vec{k}^* = -\left[\sum_{i=0}^{N-1} k_i^*\right]\vec{1} \tag{11}$$

En tenant compte des formules (10) et (11), la formule (9) s'écrit finalement :

$$\vec{C} = \vec{k} - \frac{1}{(L+1)\sigma^2}\left[\sum_{i=0}^{L-1}(k_i + k_i^*)\right]\vec{I}$$

En appelant $k_{iR}$, la partie réelle des échantillons complexes $k_i$ de la réponse impulsionnelle du chemin d'écho, on peut écrire aussi :

$$\vec{C} = \vec{k} - \frac{2}{(L+1)\sigma^2}\left[\sum_{i=0}^{N} k_{iR}\right]\vec{I} \qquad (12)$$

Dans cette expression (12) le terme

$$\sum_{i=0}^{N} k_{iR}$$

représente la composante continue de la partie réelle de la réponse impulsionnelle du chemin d'écho. Si cette composante continue est nulle, l'expression (12) se réduit à $\vec{C} = \vec{k}$, ce qui démontre que les coefficients $\vec{C}$ calculés selon la formule (7) avec un signal d'apprentissage répondant aux propriétés (4) et (5), permettent l'annulation du signal d'écho.

Mais, généralement, ladite composante continue n'est pas nulle. Par exemple, dans le type d'annuleur d'écho dit passe-bande envisagé sur la figure 1, si la fréquence d'échantillonnage du signal reçu est égale à 1/T, c'est-à-dire inférieure à la fréquence de Shannon, la composante continue de la réponse impulsionnelle du chemin d'écho n'est évidemment pas nulle. Mais même si le signal reçu est échantillonné à une fréquence d'échantillonnage $f_e = q/T$ répondant au théorème de Shannon, on aboutit à la même conclusion. En effet, ainsi qu'on l'a expliqué plus haut, on construit l'annuleur d'écho comme q sous-annuleurs d'écho travaillant en répartition dans le temps, chaque sous-annuleur d'écho travaillant de façon indépendante sur le signal reçu échantillonné à la fréquence de modulation 1/T. Il en résulte que pour chaque sous-annuleur d'écho la composante continue de la réponse impulsionnelle du chemin d'écho n'est pas nulle.

Dans le cas où la composante continue de la réponse impulsionnelle du chemin d'écho n'est pas nulle, les coefficients $\vec{C}$ obtenus diffèrent tous, d'après la formule (12), de la valeur idéale $\vec{k}$ de la même valeur $x_0$ telle que :

$$x_0 = -\frac{2}{(L+1)\sigma^2}\left[\sum_{i=0}^{N-1} k_{iR}\right] \qquad (13)$$

L'invention fournit un moyen très simple pour corriger les coefficients calculés selon la formule (7) et obtenir les coefficients corrects. Il suffit de soustraire la valeur de $x_0$, à chaque coefficient calculé. Autrement dit, en appelant $\vec{C'}$ les coefficients calculés selon la formule (7), on obtient les coefficients corrects $\vec{C} = \vec{k}$, en réalisant l'opération :

$$\vec{C} = \vec{C}' - x_0\,\vec{I} \qquad (14)$$

Pour calculer le terme de correction $x_0$, on retarde d'une période de modulation T, à l'aide du circuit de retard 21 représenté en pointillé sur la figure 1, les données émises du signal d'apprentissage D(n), par rapport aux données du signal D(n) fournies au filtre transversal de l'annuleur d'écho. Dans ces conditions, du point de vue de l'annuleur d'écho le premier coefficient $k_0$ de la réponse impulsionnelle du chemin d'écho est forcément nul. Si l'on a choisi d'autre part, le nombre N de coefficients du filtre transversal une unité plus grand que le nombre strictement nécessaire, correspondant à la durée maximale de la réponse impulsionnelle du chemin d'écho, le calcul des coefficients du filtre transversal à l'aide de la formule (7) donne pour le premier coefficient la valeur $C'_0 = x_0$. Cette valeur de correction $x_0$ ainsi formée est retranchée des autres coefficients calculés, ce qui, conformément à la formule (14), permet d'obtenir les coefficients corrects. Bien entendu, si l'on retarde les données émises de plusieurs périodes T, on peut obtenir avec un nombre adapté de coefficients N, plusieurs valeurs de correction $x_0$, en principe identiques.

On va maintenant décrire un procédé simple pour obtenir un signal d'apprentissage complexe dont les données d(n) répondent aux propriétés (3) et (4).

Ce procédé peut être mis en œuvre comme l'indique à titre d'exemple la figure 2. Le dispositif de la figure 2 comporte deux générateurs 25 et 26 de séquence pseudo-aléatoire de longueur maximale. Ces deux générateurs sont identiques et constitués de façon bien connue par un registre à décalage à p éléments, les sorties de deux éléments étant appliquées à un circuit OU exclusif dont la sortie est connectée à l'entrée du registre. Les impulsions de fréquence 1/T fournies par le générateur 8 servent au décalage des registres des deux générateurs. Les deux générateurs fournissent des séquences identiques de longueur $L = 2^p - 1$, mais décalées entre elles de k éléments au moyen de signaux d'initialisation convenables $I_a$ et $I_b$. De cette manière si l'on appelle a(n) et b(n) les signaux binaires fournis respectivement par les générateurs 25 et 26, on peut écrire :

$$b(n) = a(n + k) .$$

Les deux signaux binaires a(n) et b(n) sont appliqués à un codeur 28 qui fournit le signal d'apprentissage complexe recherché, formé de données complexes d(n), ayant une composante réelle $d_r(n)$ et une composante imaginaire $d_i(n)$. Le tableau I ci-dessous montre les opérations effectuées dans le codeur 28. On suppose pour simplifier l'écriture que les données fournies par le circuit 28 sont normées, c'est-à-dire que pour ces données le coefficient $\sigma$ de normalisation est égal à 1.

Tableau I

| a(n) | b(n) | $d_r(n)$ | $d_i(n)$ | d(n) |
|---|---|---|---|---|
| 1 | 1 | 1 | 0 | 1 |
| 1 | - 1 | 0 | 1 | j |
| - 1 | 1 | 0 | - 1 | - j |
| - 1 | - 1 | - 1 | 0 | - 1 |

Les deux générateurs 25 et 26 étant supposés fournir des signaux binaires a(n) et b(n) de valeur — 1 ou 1, les deux premières colonnes montrent les 4 configurations possibles pour les couples de signaux a(n) et b(n).

Les deux colonnes suivantes montrent les valeurs des signaux $d_r(n)$ et $d_i(n)$ qui sont respectivement la composante réelle et la composante imaginaire du signal complexe recherché d(n) dont les valeurs sont indiquées dans la dernière colonne. $d_r(n)$ et $d_i(n)$ se déduisent de a(n) et b(n) par les relations de combinaison :

$$\begin{cases} d_r(n) = \frac{1}{2}[a(n) + b(n)] \\ d_i(n) = \frac{1}{2}[a(n) - b(n)] \end{cases} \quad (15)$$

On voit que les signaux a(n) et b(n) à deux niveaux + 1 et — 1, ont été combinés pour former des signaux $d_r(n)$ et $d_i(n)$ à trois niveaux + 1, — 1 et 0, de telle sorte que le signal complexe d(n) prenne les valeurs réelles + 1 ou — 1 ou les valeurs imaginaires + j et — j.

On peut remarquer que l'on pourrait aussi bien former le signal complexe d(n) par les relations de combinaison :

$$\begin{cases} d_r(n) = \frac{1}{2}[a(n) - b(n)] \\ d_i(n) = \frac{1}{2}[a(n) + b(n)] \end{cases} \quad (16)$$

On pourrait aussi changer les signes des seconds membres dans les formules (15) et (16) ci-dessus. Il est clair qu'au lieu de former comme on vient de l'expliquer les données complexes d(n) du signal

d'apprentissage, à l'aide de deux générateurs de séquences pseudo-aléatoires et d'un circuit de codage, on pourrait aussi bien emmagasiner dans une mémoire les composantes prévues $d_r(n)$ et $d_i(n)$ des données d(n) d'une période LT du signal d'apprentissage et lire ces composantes à la cadence 1/T.

On va maintenant décrire comment on peut utiliser de façon optimale le signal d'apprentissage formé d'une manière ou d'une autre, comme on vient de l'expliquer.

Pour simplifier l'écriture, on appelle AC(i) le premier membre de la formule (4) qui définit l'une des propriétés exigée pour le signal d'apprentissage en y faisant $\sigma = 1$, puisqu'on a supposé que les données fournies par le circuit 28 étaient normées. On a alors :

$$AC(i) = \sum_{n=0}^{L-1} d(n) \cdot d^*[(n-i) \text{ modulo } L] \qquad (17)$$

AC(i) est la fonction d'autocorrélation du signal complexe d(n), pour un décalage i.

On appelle B(i) le premier membre de la formule (5) qui définit l'autre propriété exigée pour le signal d'apprentissage, en y faisant $\sigma = 1$, soit :

$$B(i) = \sum_{n=0}^{L-1} d^*(n) \cdot d^*[(n-i) \text{ modulo } L] \qquad (18)$$

Les deux fonctions AC(i) et B(i) sont périodiques avec une période L ;

Avec le signal d'apprentissage constitué de données complexes d(n) formées comme on l'a expliqué ci-dessus à partir de deux séquences pseudo-aléatoires de longueur maximale identiques, mais décalées de k, puis codées comme l'indique le Tableau I, on peut montrer que la fonction d'autocorrélation AC(i) prend, dans une période L telle que celle définie pour i allant de 0 à L — 1, les valeurs suivantes :

$$\begin{cases} AC(0) = L \\ AC(k) = -1 + j\dfrac{L+1}{2} \\ AC(L-k) = -1 - j\dfrac{L+1}{2} \\ AC(i) = -1 \end{cases} \qquad (19)$$

pour toutes autres valeurs de i, c'est-à-dire $1 \leq i \leq L-1$, $i \neq k$, $i \neq L-k$.

Ces valeurs AC(i) sont portées en fonction de i sur le diagramme 3<u>a</u> de la figure 3. On remarque notamment que pour i = k et i = L — k (on a choisi sur la figure k < L — k), la fonction AC(i) prend deux valeurs complexes conjuguées représentées par des flèches inclinées. A partir de i = L, la fonction AC(i) se reproduit avec la période L.

On peut montrer également que la fonction B(i) prend dans une période, pour i allant de 0 à L — 1, les valeurs suivantes :

$$\begin{cases} B(k) = B(L-k) = \dfrac{L-1}{2} \\ B(i) = -1 \end{cases} \qquad (20)$$

pour toutes autres valeurs de i, c'est-à-dire : $0 \leq i \leq L-1$, $i \neq k$ et $i \neq L-k$.

Ces valeurs de B(i) sont portées en fonction de i sur le diagramme 3b de la figure 3.

En utilisant les notations des formules (17) et (18), les formules (4) et (5) définissant les propriétés requises pour le signal d'apprentissage s'écrivent :

$$AC(i) = -1 \text{ pour tout i tel que } 1 \leq i \leq N-1 \qquad (21)$$

$$B(i) = -1 \text{ pour tout i tel que } 0 \leq i \leq N-1 \qquad (22)$$

On constate que le signal d'apprentissage d(n) formé comme on l'a expliqué possède ces propriétés à condition de choisir :

$$N \leq k_{inf}$$

où $k_{inf}$ désigne la plus petite des deux valeurs k et L — k.

Pour un signal de données d(n) de période donnée L, on a toujours intérêt à éloigner le plus possible de l'origine i = 0, les termes parasites AC(k) et AC(L — k) de la fonction d'autocorrélation.

Ceci est obtenu pour

$$k = \frac{L-1}{2} \tag{23}$$

Puisque $L = 2^p - 1$ est impair, k est bien un nombre entier.
On a alors :

$$L - k = \frac{L+1}{2} \tag{24}$$

Pour ces valeurs particulières (23) et (24) de k et L — k, les deux termes parasites AC(k) et AC(L — k) sont les plus proches possibles l'un de l'autre, comme le montre le diagramme 3c. On obtient alors, dans ces conditions :

$$AC(i) = -1 \text{ pour tout i tel que } 1 \leq i \leq \frac{L-1}{2} - 1 \tag{25}$$

Pour les valeurs particulières (23) et (24) de k et L — k, les deux termes parasites de B(i), soient B(k) et B(L — k), sont également les plus proches possibles l'un de l'autre comme le montre le diagramme 3d. On obtient alors dans ces conditions :

$$B(i) = -1 \text{ pour tout i tel que } 0 \leq i \leq \frac{L-1}{2} - 1 \tag{26}$$

Il résulte des propriétés (21) et (22) strictement requises pour le signal d'apprentissage, qu'un signal d'apprentissage de période L, formé comme on l'a expliqué avec $k = (L-1)/2$, convient pour tout annuleur d'écho comportant un filtre transversal de longueur N telle que :

$$N \leq (L-1)/2 \ .$$

Inversement, pour un filtre transversal de longueur N donnée, on doit choisir un signal d'apprentissage formé comme on l'a expliqué et ayant une période L telle que :

$$L \geq 2N + 1 \ .$$

Avec ce signal d'apprentissage, le temps de convergence (L + NT) peut être réduit, lorsque $N = (L-1)/2$, à $(3N + 1)T \simeq 3NT$.

**Revendications** (pour les Etats contractants : CH, DE, FR, GB, IT, LI, SE)

1. Procédé destiné à réduire le temps de convergence d'un annuleur d'écho connecté dans un équipement émetteur-récepteur entre deux voies unidirectionnelles émission et réception couplées à une voie de transmission bidirectionnelle et utilisé pour annuler un signal d'écho se produisant dans la voie réception en réponse à un signal fourni à la voie émission, cet annuleur d'écho comprenant un filtre transversal traitant à l'aide de N coefficients complexes réglables un signal complexe déduit du signal fourni à la voie émission et agencé pour fournir une composante réelle de signal, cet annuleur d'écho comprenant également un circuit de différence pour former un signal de différence entre le signal dans la voie réception et le signal de sortie du filtre transversal, ce procédé comportant l'émission d'un signal d'apprentissage périodique complexe formé de données d(n) émises à des instants NT, ayant une période LT au moins égale à NT et répondant à la propriété :

$$\frac{1}{\sigma^2}\sum_{n=0}^{L-1} d(n) \cdot d^*[(n-i) \text{ modulo } L] = -1$$

pour tout i entier tel que $1 \leq i \leq N - 1$,
— ledit signal d'apprentissage émis répondant en outre à la propriété :

$$\frac{1}{\sigma^2}\sum_{n=0}^{L-1} d^*(n) \cdot d^*[(n-i) \text{ modulo } L] = -1$$

pour tout i entier tel que $0 \leqslant i \leqslant N-1$, $d^*(n)$ étant la valeur conjuguée d'une donnée $d(n)$ du signal d'apprentissage ;

— et après l'émission d'au moins N données du signal d'apprentissage, les coefficients du filtre transversal étant calculés à partir de la séquence formée par les L données émises suivantes, suivant l'expression :

$$\vec{C} = \vec{C}_0 + \frac{2}{(L+1)\sigma^2} \sum_{n=0}^{L-1} e_R(n) \cdot D^*(\vec{n})$$

$\vec{C}$ étant le vecteur des N coefficients obtenus à la fin du calcul,

$\vec{C}_0$ étant le vecteur des N coefficients initiaux,

$e_R(n)$ étant ledit signal de différence,

$\vec{D}^*(n)$ étant le vecteur des valeurs conjuguées des N dernières données entrées dans le filtre transversal,

$\sigma^2$ étant un terme constant représentatif de la puissance de chaque donnée émise.

2. Procédé selon la revendication 1, caractérisé en ce que les coefficients initiaux du filtre transversal sont mis à zéro et les coefficients $\vec{C}$ sont calculés suivant l'expression :

$$\vec{C} = \frac{2}{(L+1)\sigma^2} \sum_{n=0}^{L-1} \varepsilon_R(n) \cdot \vec{D}^*(n)$$

$\varepsilon_R(n)$ étant le signal reçu dans la voie réception.

3. Procédé selon l'une des revendications 1 ou 2, caractérisé en ce que les données du signal d'apprentissage sont émises en direction de la voie de transmission avec un retard au moins égal à une période de modulation T par rapport aux données appliquées au filtre transversal, le nombre N des coefficients du filtre transversal est choisi au moins une unité plus grand que le nombre correspondant à la durée maximale de la réponse impulsionnelle du chemin d'écho, enfin, à la fin du calcul des coefficients, le premier coefficient calculé ou l'un des coefficients supplémentaires calculés, est retranché des autres coefficients calculés pour former les coefficients désirés du filtre transversal.

4. Procédé selon l'une des revendications 1 à 3, caractérisé en ce que les données d(n) du signal d'apprentissage sont formées à partir de deux séquences pseudo-aléatoires identiques de longueur maximale L, séquences formées d'éléments + 1 et — 1 engendrés en synchronisme à la fréquence 1/T, ces deux séquences étant décalées d'un nombre k de périodes T l'une par rapport à l'autre.

5. Procédé selon la revendication 4, caractérisé en ce que la longueur L des deuxdites séquences pseudo-aléatoires est choisie de sorte que $L \geqslant 2N+1$ et le décalage entre ces deux séquences est choisi de sorte que $k = (L-1)/2$.

6. Dispositif générateur de signal d'apprentissage pour mettre en œuvre le procédé selon l'une des revendications 4 ou 5, caractérisé en ce qu'il comporte deux générateurs identiques des deuxdites séquences pseudo-aléatoires, qui sont synchronisés par le même signal de fréquence 1/T, et qui sont initialisés par des signaux d'initialisation tels que les deux séquences soient décalées d'un nombre k de périodes T, ces deux générateurs étant connectés à un circuit de codage pour former les composantes réelle et imaginaire de chaque donnée d(n) du signal d'apprentissage.

7. Dispositif générateur de signal d'apprentissage selon l'une des revendications 4 ou 5, caractérisé en ce qu'il comporte une mémoire dans laquelle sont emmagasinées les composantes réelle et imaginaire prévues des données d(n) d'une période LT du signal d'apprentissage et des moyens pour lire ces données à une fréquence 1/T.

**Revendications** (pour les Etats contractants : BE, NL)

1. Procédé destiné à réduire le temps de convergence d'un annuleur d'écho faisant partie d'un système comprenant au moins deux équipements émetteurs-récepteurs dont un est dit équipement local et l'autre équipement distant, cet annuleur d'écho qui est connecté dans un équipement émetteur-récepteur entre deux voies unidirectionnelles émission et réception couplées à une voie bidirectionnelle et qui est utilisé pour annuler un signal d'écho se produisant dans la voie réception en réponse à un signal fourni à la voie émission, comprenant un filtre transversal à N coefficients réglables traitant un signal déduit du signal fourni à la voie émission et un circuit de différence pour former un signal de différence entre deux signaux formés respectivement à partir du signal dans la voie réception et du signal de sortie du filtre transversal, ce procédé étant basé :

— sur l'émission dans l'équipement local d'un signal de données d'apprentissage d(n) formé de données émises à des instants nT, se reproduisant périodiquement après une durée LT au moins égale à NT et répondant à des propriétés d'autocorrélation,

— sur le calcul des coefficients du filtre transversal effectué à partir de ce signal de données d'apprentissage,

procédé caractérisé en ce que les propriétés d'autocorrélation sont définies par les deux relations suivantes :

$$\frac{1}{\sigma^2}\sum_{n=0}^{L-1} d(n)\cdot d^*[(n-i)\ \text{modulo}\ L] = -1$$

pour tout i entier tel que $1 \leq i \leq N-1$,

$$\frac{1}{\sigma^2}\sum_{n=0}^{L-1} d^*(n)\cdot d^*[(n-i)\ \text{modulo}\ L] = -1$$

pour tout i entier tel que $0 \leq i \leq N-1$, $d^*(n)$ étant la valeur conjuguée d'une donnée d(n) du signal d'apprentissage ;
et en ce que les calculs des coefficients du filtre transversal sont effectués, après l'émission d'au moins N données du signal d'apprentissage et à partir de la séquence formée par les L données émises suivantes selon l'expression :

$$\vec{C} = \vec{C}_0 + \frac{2}{(L+1)\sigma^2}\sum_{n=0}^{L-1} e_R(n)\cdot \vec{D}^*(n)$$

$\vec{C}$ étant le vecteur des N coefficients obtenus à la fin du calcul,
$\vec{C}_0$ étant le vecteur des N coefficients initiaux,
$e_R(n)$ étant ledit signal de différence,
$\vec{D}^*(n)$ étant le vecteur des valeurs conjuguées des N dernières données entrées dans le filtre transversal,
$\sigma^2$ étant un terme constant représentatif de la puissance de chaque donnée émise.

2. Procédé selon la revendication 1, caractérisé en ce que les coefficients initiaux du filtre transversal sont mis à zéro et les coefficients $\vec{C}$ sont calculés suivant l'expression :

$$\vec{C} = \frac{2}{(L+1)\sigma^2}\sum_{n=0}^{L-1} \varepsilon_R(n)\cdot \vec{D}^*(n)$$

$\varepsilon_R(n)$ étant le signal reçu dans la voie réception.

3. Procédé selon l'une des revendications 1 ou 2, caractérisé en ce que les données du signal d'apprentissage sont émises en direction de la voie de transmission avec un retard au moins égal à une période de modulation T par rapport aux données appliquées au filtre transversal, le nombre N des coefficients du filtre transversal est choisi au moins une unité plus grand que le nombre correspondant à la durée maximale de la réponse impulsionnelle du chemin d'écho, enfin, à la fin du calcul des coefficients, le premier coefficient calculé ou l'un des coefficients supplémentaires calculés, est retranché des autres coefficients calculés pour former les coefficients désirés du filtre transversal.

4. Procédé selon l'une des revendications 1 à 3, caractérisé en ce que les données d(n) du signal d'apprentissage sont formées à partir de deux séquences pseudo-aléatoires identiques de longueur maximale L, séquences formées d'éléments + 1 et — 1 engendrés en synchronisme à la fréquence 1/T, ces deux séquences étant décalées d'un nombre k de périodes T l'une par rapport à l'autre.

5. Procédé selon la revendication 4, caractérisé en ce que la longueur L des deuxdites séquences pseudo-aléatoires est choisie de sorte que $L \geq 2N + 1$ et le décalage entre ces deux séquences est choisi de sorte que $k = (L-1)/2$.

6. Dispositif générateur de signal d'apprentissage pour mettre en œuvre le procédé selon l'une des revendications 4 ou 5, caractérisé en ce qu'il comporte deux générateurs identiques des deuxdites séquences pseudo-aléatoires, qui sont synchronisés par le même signal de fréquence 1/T, et qui sont initialisés par des signaux d'initialisation tels que les deux séquences soient décalées d'un nombre k de périodes T, ces deux générateurs étant connectés à un circuit de codage pour former les composantes réelle et imaginaire de chaque donnée d(n) du signal d'apprentissage.

7. Dispositif générateur de signal d'apprentissage selon l'une des revendications 4 ou 5, caractérisé en ce qu'il comporte une mémoire dans laquelle sont emmagasinées les composantes réelle et imaginaire prévues des données d(n) d'une période LT du signal d'apprentissage et des moyens pour lire ces données à une fréquence 1/T.

**Claims** (for the Contracting States : CH, DE, FR, GB, IT, LI, SE)

1. A method intended to reduce the convergence time of an echo canceller connected in a

transceiver arrangement between two one-way transmit and receive paths coupled to a two-way transmission path and used to cancel an echo signal occurring in the receive path in response to a signal supplied to the transmit path, said echo canceller comprising a transversal filter having N adjustable complex coefficients for processing a complex signal derived from the signal supplied to the transmit path and arranged to supply a real signal component, said echo canceller also comprising a difference circuit for producing a difference signal between the signal in the receive path and the output signal of the transversal filter, this method comprising the step of transmitting a complex periodic training signal constituted by data d(n) transmitted at instants nT, having a period LT which is at least equal to NT and having the property :

$$\frac{1}{\sigma^2}\sum_{n=0}^{L-1} d(n)\cdot d^*[(n-1)\text{ modulo } L] = -1$$

for every integer i such that $1 \leq i \leq N-1$,

— said transmitted training signal further having the property :

$$\frac{1}{\sigma^2}\sum_{n=0}^{L-1} d^*(n)\cdot d^*[(n-i)\text{ modulo } L] = -1$$

for every integer i such that $0 \leq i \leq N-1$, d*(n) being the complex conjugate value of a datum d(n) of the training signal ;

— and after the transmission of at least N data of the training signal, the coefficients of the transversal filter being calculated from the sequence formed by the L data transmitted reset, in accordance with the expression :

$$\vec{C} = \vec{C}_0 + \frac{2}{(L+1)\sigma^2}\sum_{n=0}^{L-1} e_R(n)\cdot \vec{D}^*(n)$$

where

$\vec{C}$ is the vector of the N coefficients obtained at the end of the calculation,

$\vec{C}_0$ is the vector of the N initial coefficients,

$e_R(n)$ is said difference signal,

$\vec{D}^*(n)$ is the vector of the complex conjugate values of the last N data entering the transversal filter, and

$\sigma^2$ is a constant term representative of the power of each transmitted datum.

2. A method as claimed in Claim 1, characterized in that the initial coefficients of the transversal filter are set to zero and the coefficients $\vec{C}$ are calculated in accordance with the expression :

$$\vec{C} = \frac{2}{(L+1)\sigma^2}\sum_{n=0}^{L-1} \varepsilon_R(n)\cdot \vec{D}^*(n)$$

where $\varepsilon_R(n)$ is the signal received in the receive path.

3. A method as claimed in one of the Claims 1 or 2, characterized in that the data of the training signal are transmitted towards the transmission path with a delay at least equal to one data interval T with respect to the data applied to the transversal filter, the number N of the coefficients of the transversal filter is chosen at least one unit greater than the number corresponding to the maximum duration of the impulse response of the echo path and, at the end of calculation of the coefficients, the first coefficient calculated or one of the supplementary coefficients calculated is deducted from the other calculated coefficients so as to form the desired coefficients of the transversal filter.

4. A method as claimed in Claims 1 to 3, characterized in that the data d(n) of the training signal are formed on the basis of two identical pseudo-random sequences of maximum length L, the sequences being formed by +1 and —1 elements generated in synchronism with the frequency 1/T, these two sequences being shifted with respect to each other by a number k of data intervals T.

5. A method as claimed in Claim 4, characterized in that the length L of said two pseudo-random sequences is chosen such that $L \geq 2N+1$ and the shift between these two sequences is chosen such that $k = (L-1)/2$.

6. An apparatus for generating a training signal for implementing the method in accordance with one of the Claims 4 or 5, characterized in that it comprises two identical generators of said two pseudo-random sequences, which are synchronized by the same signal of frequency 1/T, and which are initialized by initialization signals such that the two sequences are shifted a number k of data intervals T with respect to one another, these two generators being connected to an encoding circuit to form the real and imaginary components of each of the data d(n) in the training signal.

7. An apparatus for generating a training signal in accordance with one of the Claims 4 or 5, characterized in that it comprises a memory in which the real and imaginary components of the data d(n) of a period LT of the training signal are stored and means to read these data at a rate 1/T.

**Claims** (for the Contracting States : BE, NL)

1. A method intended to reduce the convergence time of an echo canceller forming part of a system comprising at least two transceiver arrangements one of which being called local arrangement and the other remote arrangement, this echo canceller which is connected in a transceiver arrangement between two one-way transmit and receive paths coupled to a two-way transmission path and used to cancel an echo signal occurring in the receive path in response to a signal supplied to the transmit path, said echo canceller comprising a transversal filter having N adjustable coefficients for processing a signal derived from the signal supplied to the transmit path and a difference circuit for producing a difference signal between two signals formed from the signal in the receive path and the output signal of the transversal filter, respectively, this method being based on :

— the transmission in the local arrangement of a training data signal d(n) formed by data transmitted at instants nT, periodically recurring after an interval LT at least equal to NT and responding to autocorrelation properties,

— the calculation of the transversal filter coefficients made on the basis of this training data signal, the method being characterized in that the autocorrelation properties are defined by the following two relationships :

$$\frac{1}{\sigma^2}\sum_{n=0}^{L-1} d(n)\cdot d^*[(n-i)\ \mathrm{modulo}\ L] = -1$$

for every integer i such that $1 \leq i \leq N-1$,

$$\frac{1}{\sigma^2}\sum_{n=0}^{L-1} d^*(n)\cdot d^*[(n-i)\ \mathrm{modulo}\ L] = -1$$

for every integer i such that $0 \leq i \leq N-1$, $d^*(n)$ being the complex conjugate value of a datum d(n) of the training signal ; and in that the transversal filter coefficients are calculated after at least N data of the training signal have been transmitted and on the basis of the sequence formed by L data transmitted next according to the expression :

$$\vec{C} = \vec{C}_0 + \frac{2}{(L+1)\sigma^2}\sum_{n=0}^{L-1} e_R(n)\cdot\vec{D}^*(n)$$

where

$\vec{C}$ is the vector of the N coefficients obtained at the end of the calculation,

$\vec{C}_0$ is the vector of the N initial coefficients,

$e_R(n)$ is the said difference signal,

$\vec{D}^*(n)$ is the vector of the complex conjugate values of the N last data entering the transversal filter, and

$\sigma^2$ is a constant term representative of the power of each transmitted datum.

2. A method as claimed in Claim 1, characterized in that the initial coefficients of the transversal filter are set to zero and the coefficients $\vec{C}$ are calculated in accordance with the expression :

$$\vec{C} = \frac{2}{(L+1)\sigma^2}\sum_{n=0}^{L-1} \varepsilon_R(n)\cdot\vec{D}^*(n)$$

where $\varepsilon_R(n)$ is the signal received in the receive path.

3. A method as claimed in one of the Claims 1 or 2, characterized in that the data of the training signal are transmitted towards the transmission path with a delay at least equal to one data interval T with respect to the data applied to the transversal filter, the number N of the coefficients of the transversal filter is chosen at least one unit greater than the number corresponding to the maximum duration of the impulse response of the echo path, and, at the end of calculation of the coefficients, the first coefficient calculated or one of the supplementary coefficients calculated is deducted from the other.

4. A method as claimed in Claims 1 to 3, characterized in that the data d(n) of the training signal are formed on the basis of two identical pseudo-random sequences of maximum length L, the sequences

being formed by + 1 and — 1 elements generated in synchronism with the frequency 1/T, these two sequences being shifted with respect to each other by a number k of data intervals T.

5. A method as claimed in Claim 4, characterized in that the length L of said two pseudo-random sequences is chosen such that $L \geqslant 2N + 1$ and the shift between these two sequences is chosen such that $k = (L - 1)/2$.

6. An apparatus for generating a training signal for implementing the method in accordance with one of the Claims 4 or 5, characterized in that it comprises two identical generators of said two pseudo-random sequences, which are synchronized by the same signal of frequency 1/T, and which are initialized by initialization signals such that the two sequences are shifted a number k of data intervals T with respect to one another, these two generators being connected to an encoding circuit to form the real and imaginary components of each of the data d(n) in the training signal.

7. An apparatus for generating a training signal in accordance with one of the Claims 4 or 5, characterized in that it comprises a memory in which the real and imaginary components of the data d(n) of a period LT of the training signal are stored and means to read these data at a rate 1/T.

**Patentansprüche** (für die Vertragsstaaten : CH, DE, FR, GB, IT, LI, SE)

1. Verfahren zur Verringerung der Konvergenzzeit eines Echokompensators, der in einer Sende-Empfangsanordnung zwischen zwei zu einer Zweirichtungsübertragungsstrecke gekoppelten Einrichtungssende- und -empfangsstrecken geschaltet ist und dazu angewandt wird, ein als Antwort auf ein der Sendestrecke zugeführtes Signal in der Empfangsstrecke auftretendes Echosignal zu kompensieren, wobei dieser Echokompensator ein Transversalfilter aufweist, das mit Hilfe von N regelbaren komplexen Koeffizienten ein komplexes, aus dem der Sendestrecke zugeführten Signal abgeleitetes Signal verarbeitet und das Transversalfilter dazu eingerichtet ist, eine reelle Signalkomponente zu liefern, wobei dieser Echokompensator ebenfalls eine Differenzschaltung aufweist zum Bilden eines Differenzsignals zwischen dem Signal in der Empfangsstrecke und dem Ausgangssignal des Transversalfilters, welches Verfahren das Aussenden eines komplexen periodischen, aus zu den Zeitpunkten NT ausgesendeten Daten d(n) gebildeten Trainingssignals beinhaltet, wobei dieses Signal eine mindestens dem Wert NT entsprechende Periode LT aufweist, sowie die folgende Eigenschaft :

$$\frac{1}{\sigma^2}\sum_{n=0}^{L-1} d(n)\cdot d^*[(n-1)\ \text{modulo}\ L] = -1$$

für jeden ganzen Wert i mit $1 \leqslant i \leqslant N - 1$,

— dass das ausgesendete Trainingssignal ausserdem der folgenden Eigenschaft entspricht :

$$\frac{1}{\sigma^2}\sum_{n=0}^{L-1} d^*(n)\cdot d^*[(n-1)\ \text{modulo}\ L] = -1$$

für jeden ganzen Wert i mit $0 \leqslant i \leqslant N - 1$, wobei $d^*(n)$ der zu einem Datum d(n) des Trainingssignals konjugiert komplexe Wert ist ;

— und dass nach dem Aussenden von mindestens N Daten des Trainingssignals die Koeffizienten des Transversalfilters berechnet werden auf Basis der durch die L nachfolgenden ausgesendeten Daten gebildeten Folge entsprechend dem Ausdruck :

$$\vec{C} = \vec{C}_0 + \frac{2}{(L+1)\sigma^2}\sum_{n=0}^{L-1} e_R(n)\cdot\vec{D}^*(n)$$

wobei

$\vec{C}$ der Vektor der N am Ende der Berechnung erhaltenen Koeffizienten ist,

$\vec{C}_0$ der Vektor der N Anfangskoeffizienten ist,

$e_R(n)$ das Differenzsignal ist,

$\vec{D}^*(n)$ der Vektor der konjugiert komplexen Werte der N letzten in das Transversalfilter eingegebenen Daten ist, und

$\sigma^2$ eine Konstante ist, die für die Leistung jedes ausgesendeten Datums repräsentativ ist.

2. Verfahren nach Anspruch 1, dadurch gekennzeichnet, dass die Anfangskoeffizienten des Transversalfilters auf Null gestellt sind und die Koeffizienten $\vec{C}$ nach dem folgenden Ausdruck berechnet werden :

$$\vec{C} = \frac{2}{(L+1)\sigma^2}\sum_{n=0}^{L-1} E_R(n)\cdot\vec{D}^*(n),\quad \text{wobei}$$

$E_R(n)$ das in der Empfangsstrecke erhaltene Signal ist.

3. Verfahren nach einem der Ansprüche 1 oder 2, dadurch gekennzeichnet, dass gegenüber den dem Transversalfilter zugeführten Daten die Daten des Trainingssignals in Richtung der Übertragungsstrecke mit einer Verzögerung ausgesendet werden, die mindestens einer Modulationsperiode T entspricht, wobei die Anzahl N Koeffizienten des Transversalfilters um mindestens eine Einheit grösser gewählt wird als die Anzahl entsprechend der maximalen Dauer der Impulsantwort der Echostrecke, und schliesslich am Ende der Berechnung der Koeffizienten der erste berechnete Koeffizient oder einer der zusätzlichen berechneten Koeffizienten von den anderen berechneten Koeffizienten abgezogen wird zum Bilden der gewünschten Koeffizienten des Transversalfilters.

4. Verfahren nach einem der Ansprüche 1 bis 3, dadurch gekennzeichnet, dass die Daten d(n) des Trainingssignals ausgehend von zwei identischen pseudozufälligen Folgen maximaler Länge L gebildet werden, wobei die Folgen aus den Elementen + 1 und — 1 synchron zu der Frequenz 1/T gebildet sind, wobei diese zwei Folgen um eine Anzahl k der Perioden T gegenüber einander verschoben sind.

5. Verfahren nach Anspruch 4, dadurch gekennzeichnet, dass die Länge L der zwei pseudozufälligen Folgen derart gewählt wird, dass $L \geqslant 2N + 1$ ist und dass die Verschiebung zwischen den zwei Folgen derart gewählt wird, dass $k = (L - 1)/2$ ist.

6. Trainingssignalgenerator zum Durchführen des Verfahren nach einem der Ansprüche 4 oder 5, dadurch gekennzeichnet, dass er zwei identische Generatoren aufweist zum Erzeugen der zwei pseudozufälligen Folgen, wobei diese Generatoren durch dasselbe Signal mit der Frequenz 1/T synchronisiert und derart durch Initialisierungssignale initialisiert werden, dass die zwei Folgen um eine Anzahl k der Perioden T verschoben werden, wobei diese Generatoren zum Bilden der reellen und imaginären Komponenten jedes Datums d(n) des Trainingssignals mit einem Kodierer verbunden sind.

7. Trainingssignalgenerator nach einem der Ansprüche 4 oder 5, dadurch gekennzeichnet, dass er einen Speicher aufweist, in dem die reellen und imaginären Komponenten der Daten d(n) für eine Periode LT des Trainingssignals gespeichert sind, sowie Mittel zum Auslesen dieser Daten mit einer Frequenz 1/T.

**Patentansprüche** (für die Vertragsstaaten : BE, NL)

1. Verfahren zur Verringerung der Konvergenzzeit eines Echokompensators, der einen Teil eines Systems bildet, das mindestens zwei Sende-Empfangsanordnungen aufweist, von denen die eine als Ortsanordnung und die andere als Fernanordnung bezeichnet wird, wobei dieser Echokompensator in einer Sende-Empfangsanordnung zwischen zwei mit einer Zweirichtungsübertragungsstrecke gekoppelten Einrichtungssende- und -empfangsstrecken geschaltet ist und dazu angewandt wird, ein als Antwort auf ein Signal der Sendestrecke zugeführtes Signal in der Empfangsstrecke auftretendes Echosignal zu kompensieren, wobei dieser Echokompensator ein Transversalfilter mit N regelbaren Koeffizienten aufweist, das ein von dem der Sendestrecke zugeführten Signal abgeleitetes Signal verarbeitet, sowie eine Differenzschaltung zum Bilden eines Differenzsignals zwischen zwei Signalen, die auf Basis des Signals in der Empfangsstrecke bzw. des Ausgangssignals des Transversalfilters gebildet sind, wobei dieses Verfahren auf den folgenden Schritten basiert ist :

— das in der Ortsanordnung Aussenden eines Trainingsdatensignals d(n), das gebildet ist aus Daten, die zu Zeitpunkten nT ausgesendet worden sind, wobei dieses Signal nach einer Dauer LT, die mindestens dem Wert NT entspricht, wiederholt wird und bestimmte Autokorrelationseigenschaften aufweist,

— das Berechnen der Koeffizienten des Transversalfilters, wobei von diesem Trainingsdatensignal ausgegegangen wird,

dadurch gekennzeichnet, dass die Autokorrellationseigenschaften durch die folgenden zwei Beziehungen definiert werden :

$$\frac{1}{\sigma^2}\sum_{n=0}^{L-1} d(n)\cdot d^*[(n-1)\,\mathrm{modulo}\,L] = -1$$

für jeden ganzen Wert i mit $1 \leqslant i \leqslant N - 1$,

$$\frac{1}{\sigma^2}\sum_{n=0}^{L-1} d^*(n)\cdot d^*[(n-1)\,\mathrm{modulo}\,L] = -1$$

für jeden ganzen Wert i mit $0 \leqslant i \leqslant N - 1$ gilt, wobei $d^*(n)$ der zu einem Datum d(n) des Trainingssignals konjugiert komplexe Wert ist ; und dass nach dem Aussenden von mindestens N Daten des Trainingssignals die Koeffizienten des Transversalfilters berechnet werden auf Basis der durch die L nachfolgenden ausgesendeten Daten gebildeten Folge entsprechend dem Ausdruck :

$$\vec{C} = \vec{C}_0 + \frac{2}{(L+1)\sigma^2}\sum_{n=0}^{L-1} e_R(n)\cdot\vec{D}^*(n)$$

wobei

$\vec{C}$ der Vektor der N am Ende der Berechnung erhaltenenen Koeffizienten ist,

$\vec{C}_0$ der Vektor der N Anfangskoeffizienten ist,

$e_R(n)$ das Differenzsignal ist,

$\vec{D}^*(n)$ der Vektor der konjugiert komplexen Werte der N letzten in das Transversalfilter eingegebenen Daten ist, und

$\sigma^2$ eine Konstante ist, die für die Leistung jedes ausgesendeten Datums repräsentativ ist.

2. Verfahren nach Anspruch 1, dadurch gekennzeichnet, dass die Anfangskoeffizienten des Transversalfilters auf Null gestellt sind und die Koeffizienten $\vec{C}$ nach dem folgenden Ausdruck berechnet werden :

$$\vec{C} = \frac{2}{(L+1)\sigma^2} \sum_{n=0}^{L-1} E_R(n) \cdot \vec{D}^*(n), \quad \text{wobei}$$

$E_R(n)$ das in der Empfangsstrecke erhaltene Signal ist.

3. Verfahren nach einem der Ansprüche 1 oder 2, dadurch gekennzeichnet, dass gegenüber den dem Transversalfilter zugeführten Daten die Daten des Trainingssignals in Richtung der Übertragungsstrecke mit einer Verzögerung ausgestrahlt werden, die mindestens einer Modulationsperiode T entspricht, wobei die Anzahl N Koeffizienten des Transversalfilters um mindestens eine Einheit grösser gewählt wird als die Anzahl entsprechend der maximalen Dauer der Impulsantwort der Echostrecke, und schliesslich am Ende der Berechnung der Koeffizienten der erste berechnete Koeffizient oder einer der zusätzlichen berechneten Koeffizienten von den anderen berechneten Koeffizienten abgezogen wird zum Bilden der gewünschten Koeffizienten des Transversalfilters.

4. Verfahren nach einem der Ansprüche 1 bis 3, dadurch gekennzeichnet, dass die Daten d(n) des Trainingssignals ausgehend von zwei identischen pseudozufälligen Folgen maximaler Länge L gebildet werden, wobei die Folgen aus den Elementen + 1 und — 1 synchron zu der Frequenz 1/T gebildet sind, wobei diese zwei Folgen um eine Anzahl k der Perioden T gegenüber einander verschoben sind.

5. Verfahren nach Anspruch 4, dadurch gekennzeichnet, dass die Länge L der zwei pseudozufälligen Folgen derart gewählt wird, dass $L \geq 2N + 1$ ist und dass die Verschiebung zwischen den zwei Folgen derart gewählt wird, dass $k = (L - 1)/2$ ist.

6. Trainingssignalgenerator zum Durchführen des Verfahrens nach einem der Ansprüche 4 oder 5, dadurch gekennzeichnet, dass er zwei identische Generatoren aufweist zum Erzeugen der zwei pseudozufälligen Folgen, wobei diese Generatoren durch dasselbe Signal mit der Frequenz 1/T synchronisiert und derart durch Initialisierungssignale initialisiert werden, dass die zwei Folgen um eine Anzahl k der Perioden T verschoben werden, wobei diese Generatoren zum Bilden der reellen und imaginären Komponenten jedes Datums d(n) des Trainingssignals mit einem Kodierer verbunden sind.

7. Trainingssignalgenerator nach einem der Ansprüche 4 oder 5, dadurch gekennzeichnet, dass er einen Speicher aufweist, in dem die reellen und imaginären Komponenten der Daten d(n) für eine Periode LT des Trainingssignals gespeichert sind, sowie Mittel zum Auslesen dieser Daten mit einer Frequenz 1/T.

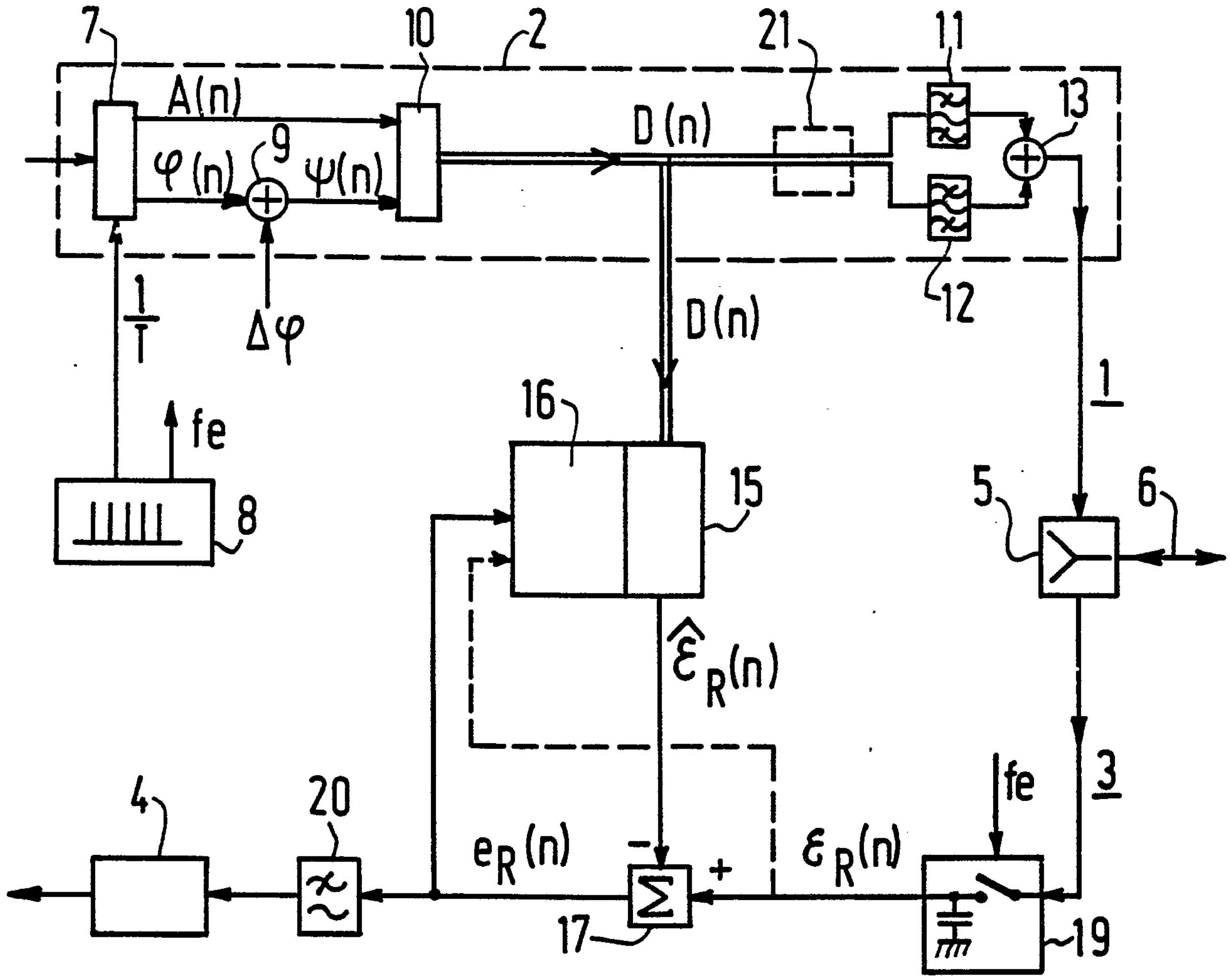
7
2
10
21
11
12
13
A(n)
φ(n)
9
ψ(n)
D(n)
D(n)
1/T
Δφ
fe
8
16
15
1
5
6
$\hat{\varepsilon}_R(n)$
3
fe
4
20
$e_R(n)$
$\varepsilon_R(n)$
17
19

FIG.1

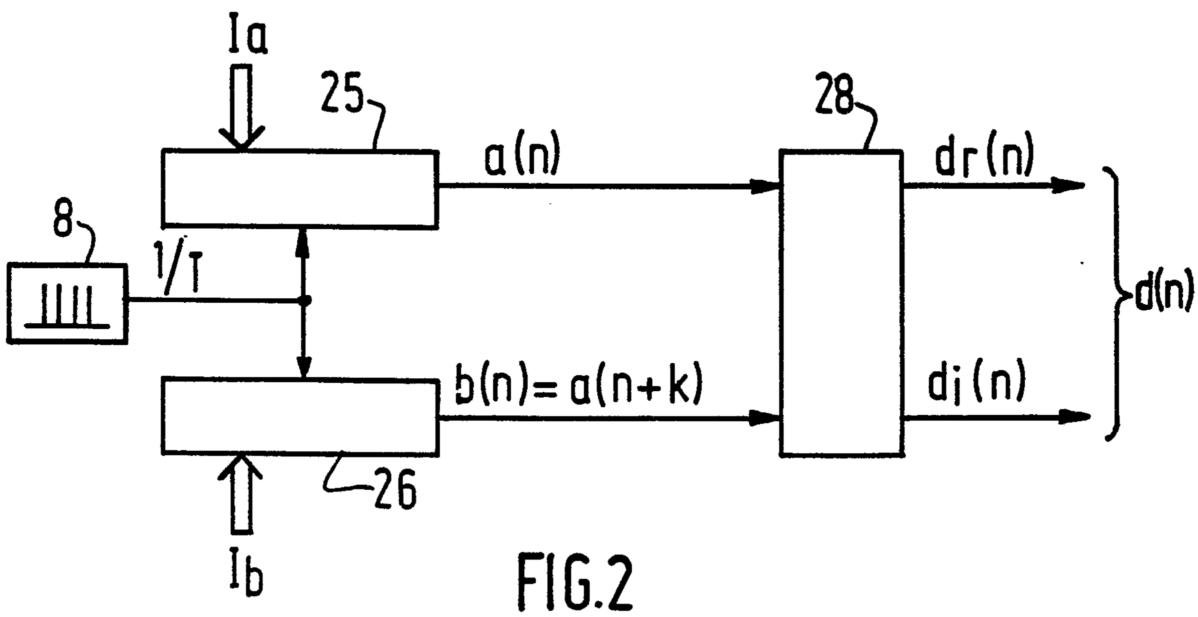
Ia
25
28
a(n)
dr(n)
8
1/T
d(n)
b(n)=a(n+k)
di(n)
26
Ib

FIG.2

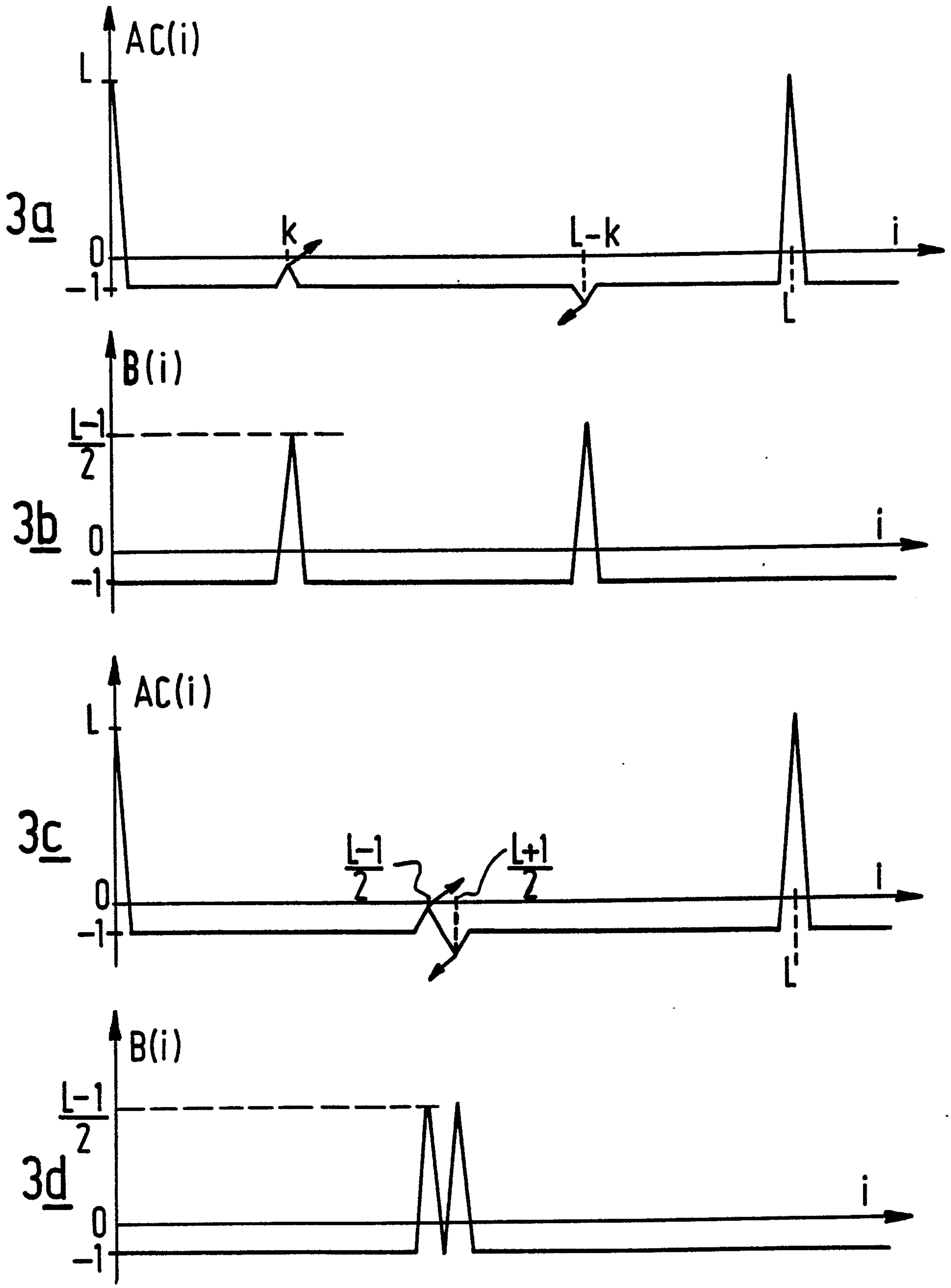


FIG.3